# EUROPEAN PATENT SPECIFICATION

(11) **EP 1 952 589 B1**
(45) Date of publication and mention of the grant of the patent: **07.10.2009**
(21) Application number: 06807579.5
(22) Date of filing: 26.10.2006
(51) Int. Cl.: H04L 12/56, G06F 9/46

(54) **SENDING ROUTING DATA BASED ON TIMES THAT SERVERS JOINED A CLUSTER**
VERSENDEN VON ROUTING-DATEN BASIEREND AUF DEN ZEITEN ZU DENEN SERVER SICH EINEM CLUSTER ANSCHLIESSEN
ENVOI DE DONNEES D'ACHEMINEMENT BASE SUR LES MOMENTS OU DES SERVEURS ONT REJOINT UNE GRAPPE

(30) Priority: 17.11.2005 US 282029
(43) Date of publication of application: 06.08.2008
(73) Proprietor: International Business Machines Corporation, Armonk, NY 10504 (US)
(72) Inventor: DYKES, Pernell, James, Byron, Minnesota 55920 (US); NEWPORT, William, Rochester, Minnesota 55902 (US); SHEN, Jinmei, Rochester, Minnesota 55901 (US); SUTTER, Kevin, William, Rochester, Minnesota 55906 (US); WANG, Hao, Rochester, Minnesota 55901-3786 (US)
(74) Representative: Williams, Julian David
(86) International application number: PCT/EP2006/067819
(87) International publication number: WO 2007/057284

(56) References cited:
- WO-A-01/76269
- WO-A2-20/04077280
- XIAOLE BAI ET AL: "ICN: interest-based clustering network" PEER-TO-PEER COMPUTING, 2004. PROCEEDINGS. PROCEEDINGS. FOURTH INTERNATIONAL CONFERENCE ON ZURICH, SWITZERLAND 25-27 AUG. 2004, PISCATAWAY, NJ, USA,IEEE, 25 August 2004 (2004-08-25), pages 219-226, XP010724986 ISBN: 0-7695-2156-8
- RANA O F ET AL: "Resource discovery for dynamic clusters in computational grids" PARALLEL AND DISTRIBUTED PROCESSING SYMPOSIUM., PROCEEDINGS 15TH INTERNATIONAL SAN FRANCISCO, CA, USA 23-27 APRIL 2001, LOS ALAMITOS, CA, USA,IEEE COMPUT. SOC, US, 23 April 2001 (2001-04-23), pages 759-767, XP010544458 ISBN: 0-7695-0990-8

## Description

### FIELD

An embodiment of the invention generally relates to computers. In particular, an embodiment of the invention generally relates to a cluster of computer systems connected via a network.

### BACKGROUND

The development of the EDVAC computer system of 1948 is often cited as the beginning of the computer era. Since that time, computer systems have evolved into extremely sophisticated devices, and computer systems may be found in many different settings. Computer systems typically include a combination of hardware, such as semiconductors and circuit boards, and software, also known as computer programs. As advances in semiconductor processing and computer architecture push the performance of the computer hardware higher, more sophisticated and complex computer software has evolved to take advantage of the higher performance of the hardware, resulting in computer systems today that are much more powerful than just a few years ago.

Years ago, computers were stand-alone devices that did not communicate with each other, but today, computers are increasingly connected in networks and one computer, called a client, may request another computer, called a server, to perform an operation. With the advent of the Internet, this client/server model is increasingly being used in online businesses and services, such as online auction houses, stock trading, banking, commerce, and information storage and retrieval.

Servers that process requests from clients are often organized into clusters connected via a network. A steady server state in a cluster is ideal, in which the servers that exist in the cluster and the data and services available on the servers are known and constant. A steady server state allows client requests to use the servers immediately after the servers become available, so the client requests do not encounter an error.

In contrast to the steady server state, a cluster of servers may exist in a turbulent server state. A turbulent server state may be caused by the following factors: the dynamic addition and removal of servers to and from the cluster, the dynamic addition and removal of data items and services to and from the servers, the start up of servers in the cluster, and failure of the servers. A turbulent server states causes problems in finding the correct server in a cluster to process a request from a client because routing information, which identifies the servers and their data and services, becomes stale. Stale routing information may cause the client requests to encounter errors. For example, stale routing information may cause client requests to be routed to a server where data or services are no longer available(too late), and may cause client requests to be routed to servers where new data or new services are not yet ready to handle the requests (too early). Thus, stale routing information, commonly caused by a turbulent server state, impacts the satisfaction of the customer at the client.

One current approach for attempting to deal with a turbulent server state and the resulting stale routing information is called a bulletin board approach. In a bulletin board approach, one server in the cluster is designated a coordinator, all servers in the cluster send their routing information to the coordinator, and all clients retrieve the routing information for the servers in the cluster from the coordinator. If the coordinator is removed from the cluster or encounters an error, a new coordinator is chosen, and every server reposts its routing information to the new coordinator. Thus, the bulletin board approach causes additional network traffic, which adversely impacts performance and customer satisfaction.

WO 01/76269 A (British Telecomm [GB]; Shipman, Robert Andrew [GB] 11 October 2001 (2001-10-110) discloses network routing in packet switched networks.

Xiaole Bai et al: "ICN: interest-based clustering network", Peer-to-Peer Computing, 2004. Proceedings. Fourth International Conference on Zurich, Switzerland 25-27 Aug. 2004, Piscataway, NJ, USA, IEEE, 25 August 2004, pages 219-226, XP010724986 ISBN: 0-7695-2156-8, discloses Internet based clustering in peer to peer networks.

WO 2004/077280 A2 (BEA Systems Inc.[US]; Peddada, Prasad [US] 10 September 2004, discloses communications between servers in a cluster, using point to point messaging.

Thus, what is needed is a better technique for coordinating routing information.

### SUMMARY

The present invention provides a method performed at a receiving server, as claimed in claim 1.

The present invention also provides a corresponding method performed at a new server, as claimed in claim 8.

Corresponding system and computer programs are also provided.

In this way, a cluster can respond to servers dynamically joining and leaving the cluster while reducing network traffic.

### BRIEF DESCRIPTION OF THE DRAWINGS

Various embodiments of the present invention are hereinafter described in conjunction with the appended drawings:
Fig. 1 depicts a block diagram of an example system for implementing an embodiment of the invention.
Fig. 2A depicts a block diagram of an example cluster of servers, according to an embodiment of the invention.
Fig. 2B depicts a block diagram of an example new server joining a cluster of servers, according to an embodiment of the invention.
Fig. 3 depicts a block diagram of the merger of example clusters of servers, according to an embodiment of the invention.
Fig. 4 depicts a block diagram of example routing data, according to an embodiment of the invention.
Fig. 5 depicts a flowchart of example processing for a new server joining a cluster of servers, according to an embodiment of the invention.
Fig. 6 depicts a flowchart of example processing for connecting clusters of servers, according to an embodiment of the invention.
Fig. 7 depicts a flowchart of example processing for a broadcast message, according to an embodiment of the invention.
Fig. 8 depicts a flowchart of example processing responding to a server leaving a network, according to an embodiment of the invention.

It is to be noted, however, that the appended drawings illustrate only example embodiments of the invention, and are therefore not considered limiting of its scope, for the invention may admit to other equally effective embodiments.

### DETAILED DESCRIPTION

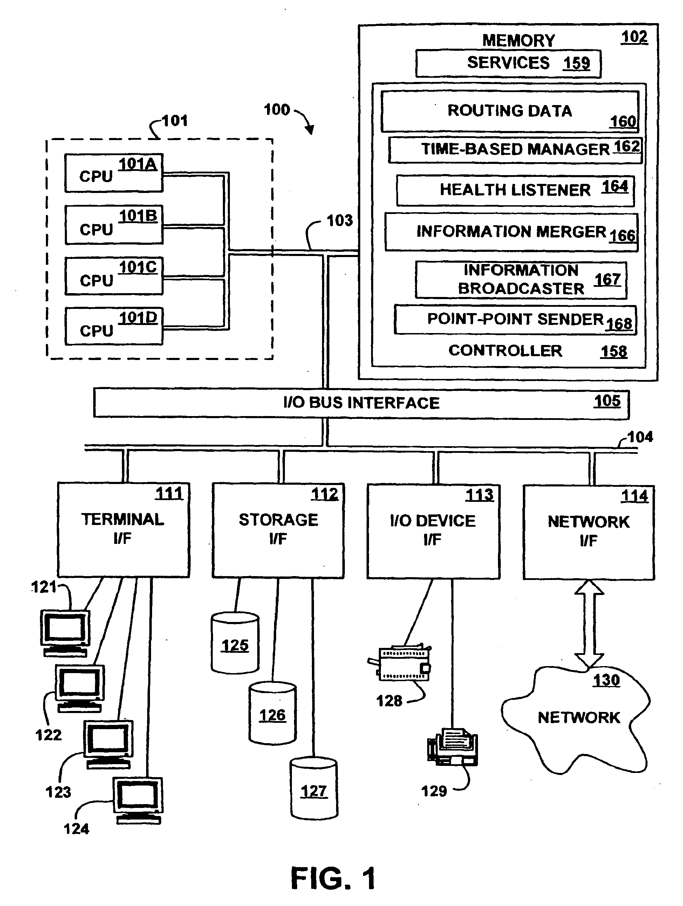

Referring to the Drawings, wherein like numbers denote like parts throughout the several views, Fig. 1 depicts a high-level block diagram representation of a server computer system 100 connected to a network 130, according to an embodiment of the present invention. The terms "computer system" and "server" are used for convenience only, any appropriate electronic devices may be used, in various embodiments the computer system 100 may operate as either a client or a server, and a computer system or electronic device that operates as a client in one context may operate as a server in another context. The major components of the server computer system 100 include one or more processors 101, a main memory 102, a terminal interface 111, a storage interface 112, an I/O (Input/Output) device interface 113, and communications/network interfaces 114, all of which are coupled for inter-component communication via a memory bus 103, an I/O bus 104, and an I/O bus interface unit 105.

The server computer system 100 contains one or more general-purpose programmable central processing units (CPUs) 101A, 101B, 101C, and 101D, herein generically referred to as a processor 101. In an embodiment, the computer system 100 contains multiple processors typical of a relatively large system; however, in another embodiment the computer system 100 may alternatively be a single CPU system. Each processor 101 executes instructions stored in the main memory 102 and may include one or more levels of on-board cache.

The main memory 102 is a random-access semiconductor memory for storing data and programs. The main memory 102 is conceptually a single monolithic entity, but in other embodiments the main memory 102 is a more complex arrangement, such as a hierarchy of caches and other memory devices. For example, memory may exist in multiple levels of caches, and these caches may be further divided by function, so that one cache holds instructions while another holds non-instruction data, which is used by the processor or processors. Memory may further be distributed and associated with different CPUs or sets of CPUs, as is known in any of various so-called non-uniform memory access (NUMA) computer architectures.

The main memory 102 includes a controller 158 and services 159. Although the controller 158 and the services 159 are illustrated as being contained within the memory 102 in the computer system 100, in other embodiments some or all of them may be on different computer systems and may be accessed remotely, e.g., via the network 130. The computer system 100 may use virtual addressing mechanisms that allow the programs of the computer system 100 to behave as if they only have access to a large, single storage entity instead of access to multiple, smaller storage entities. Thus, while the controller 158 and the services 159 are illustrated as being contained within the main memory 102, these elements are not necessarily all completely contained in the same physical storage device at the same time. Further, although the controller 158 and the services 159 are illustrated as being separate entities, in other embodiments some of them, or portions of some of them, may be packaged together.

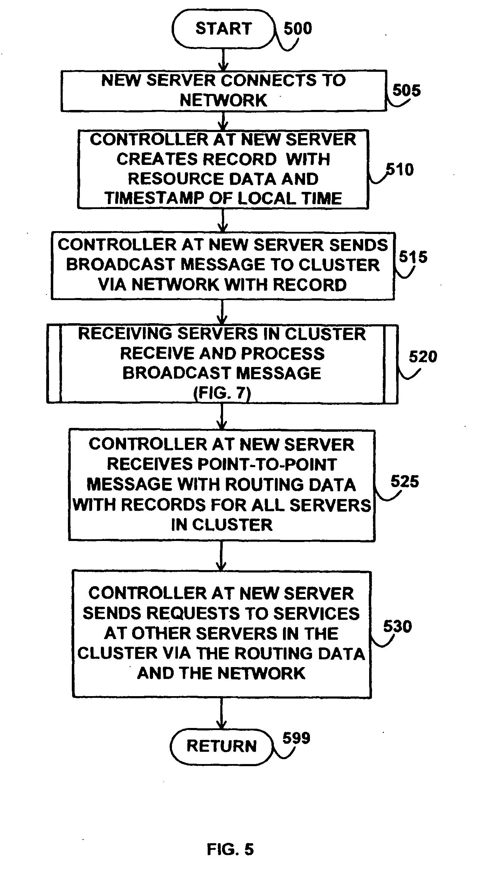

In an embodiment, the controller 158 includes instructions stored in the memory 102 capable of executing on the processor 101 or statements capable of being interpreted by instructions executing on the processor 101 to perform the functions as further described below with reference to Figs. 5, 6, 7, and 8. In another embodiment, the controller 158 may be implemented in microcode or firmware. In another embodiment, the controller 158 may be implemented in hardware via logic gates and/or other appropriate hardware techniques.

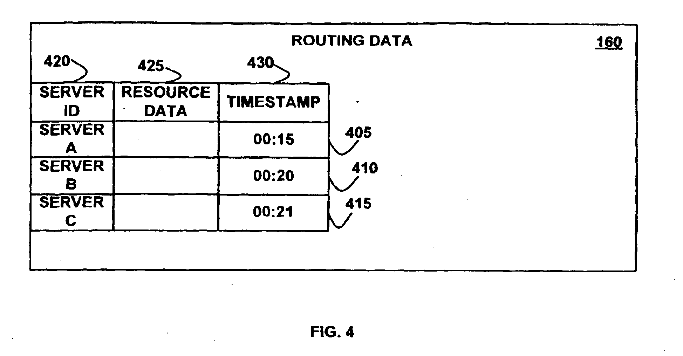

The controller 158 includes routing data 160, a time-based manager 162, a health listener 164, an information merger 166, an information broadcaster 167, and a point-to-point sender 168. The time-based manager 162 calculates elapsed time since a server joined a cluster of servers. The health listener 164 monitors for errors associated with the servers 100 or the network 130. The information merger 166 merges information into the routing data 160. The information broadcaster 167 sends broadcast messages to the network 130. The point-to-point sender 168 sends point-to-point messages to servers attached to the network 130. The routing data 160 describes the servers 100 connected to the network 130. The routing data 160 is further described below with reference to Fig. 4.

The services 159 are services, functions, or methods available at the server 100, and in various embodiments may be applications, user applications, third-party applications, application servers, operating systems, any other appropriate services, or portion or combination thereof.

The memory bus 103 provides a data communication path for transferring data among the processor 101, the main memory 102, and the I/O bus interface unit 105. The I/O bus interface unit 105 is further coupled to the system I/O bus 104 for transferring data to and from the various I/O units. The I/O bus interface unit 105 communicates with multiple I/O interface units 111, 112, 113, and 114, which are also known as I/O processors (IOPs) or I/O adapters (IOAs), through the system I/O bus 104. The system I/O bus 104 may be, e.g., an industry standard PCI bus, or any other appropriate bus technology.

The I/O interface units support communication with a variety of storage and I/O devices. For example, the terminal interface unit 111 supports the attachment of one or more user terminals 121, 122, 123, and 124. The storage interface unit 112 supports the attachment of one or more direct access storage devices (DASD) 125, 126, and 127 (which are typically rotating magnetic disk drive storage devices, although they could alternatively be other devices, including arrays of disk drives configured to appear as a single large storage device to a host). The contents of the main memory 102 may be stored to and retrieved from the direct access storage devices 125, 126, and 127.

The I/O device interface 113 provides an interface to any of various other input/output devices or devices of other types. Two such devices, the printer 128 and the fax machine 129, are shown in the exemplary embodiment of Fig. 1, but in other embodiments many other such devices may exist, which may be of differing types. The network interface 114 provides one or more communications paths from the computer system 100 to other digital devices and computer systems; such paths may include, e.g., one or more networks 130.

Although the memory bus 103 is shown in Fig. 1 as a relatively simple, single bus structure providing a direct communication path among the processors 101, the main memory 102, and the I/O bus interface 105, in fact the memory bus 103 may comprise multiple different buses or communication paths, which may be arranged in any of various forms, such as point-to-point links in hierarchical, star or web configurations, multiple hierarchical buses, parallel and redundant paths, etc. Furthermore, while the I/O bus interface 105 and the I/O bus 104 are shown as single respective units, the computer system 100 may in fact contain multiple I/O bus interface units 105 and/or multiple I/O buses 104. While multiple I/O interface units are shown, which separate the system I/O bus 104 from various communications paths running to the various I/O devices, in other embodiments some or all of the I/O devices are connected directly to one or more system I/O buses.

The computer system 100 depicted in Fig. 1 has multiple attached terminals 121, 122, 123, and 124, such as might be typical of a multi-user "mainframe" computer system. Typically, in such a case the actual number of attached devices is greater than those shown in Fig. 1, although the present invention is not limited to systems of any particular size. The computer system 100 may alternatively be a single-user system, typically containing only a single user display and keyboard input, or might be a server or similar device which has little or no direct user interface, but receives requests from other computer systems (clients). In other embodiments, the computer system 100 may be implemented as a personal computer, portable computer, laptop or notebook computer, PDA (Personal Digital Assistant), tablet computer, pocket computer, telephone, pager, automobile, teleconferencing system, appliance, or any other appropriate type of electronic device.

The network 130 may be any suitable network or combination of networks and may support any appropriate protocol suitable for communication of data and/or code to/from the computer system 100. In various embodiments, the network 130 may represent a storage device or a combination of storage devices, either connected directly or indirectly to the computer system 100. In an embodiment, the network 130 may support Infiniband. In another embodiment, the network 130 may support wireless communications. In another embodiment, the network 130 may support hard-wired communications, such as a telephone line or cable. In another embodiment, the network 130 may support the Ethernet IEEE (Institute of Electrical and Electronics Engineers) 802.3x specification. In another embodiment, the network 130 may be the Internet and may support IP (Internet Protocol).
In another embodiment, the network 130 may be a local area network (LAN) or a wide area network (WAN). In another embodiment, the network 130 may be a hotspot service provider network. In another embodiment, the network 130 may be an intranet. In another embodiment, the network 130 may be a GPRS (General Packet Radio Service) network. In another embodiment, the network 130 may be a FRS (Family Radio Service) network. In another embodiment, the network 130 may be any appropriate cellular data network or cell-based radio network technology. In another embodiment, the network 130 may be an IEEE 802.11B wireless network. In still another embodiment, the network 130 may be any suitable network or combination of networks. Although one network 130 is shown, in other embodiments any number of networks (of the same or different types) may be present.

It should be understood that Fig. 1 is intended to depict the representative major components of the computer system 100 and the network 130 at a high level, that individual components may have greater complexity than represented in Fig. 1, that components other than or in addition to those shown in Fig. 1 may be present, and that the number, type, and configuration of such components may vary. Several particular examples of such additional complexity or additional variations are disclosed herein; it being understood that these are by way of example only and are not necessarily the only such variations.

The various software components illustrated in Fig. 1 and implementing various embodiments of the invention may be implemented in a number of manners, including using various computer software applications, routines, components, programs, objects, modules, data structures, etc., referred to hereinafter as "computer programs," or simply "programs" The computer programs typically comprise one or more instructions or statements that are resident at various times in various memory and storage devices in the computer system 100, and that, when read and executed by one or more processors in the computer system 100, cause the computer system 100 to perform the steps necessary to execute steps or elements comprising the various aspects of an embodiment of the invention.

Moreover, while embodiments of the invention have and hereinafter will be described in the context of fully functioning computer systems, the various embodiments of the invention are capable of being distributed as a program product in a variety of forms, and the invention applies equally regardless of the particular type of signal-bearing medium used to actually carry out the distribution. The programs defining the functions of this embodiment may be delivered to the computer system 100 via a variety of tangible computer recordable and readable signal-bearing media, which include, but are not limited to:
(1) information permanently stored on a non-rewriteable storage medium, e.g., a read-only memory device attached to or within a computer system, such as a CD-ROM, DVD-R, or DVD+R;
(2) alterable information stored on a rewriteable storage medium, e.g., a hard disk drive (e.g., the DASD 125, 126, or 127), CD-RW, DVD-RW, DVD+RW, DVD-RAM, or diskette; or
(3) information conveyed by a communications medium, such as through a computer or a telephone network, e.g., the network 130.

Such tangible signal-bearing media, when carrying machine-readable instructions that direct the functions of the present invention, represent embodiments of the present invention.

Embodiments of the present invention may also be delivered as part of a service engagement with a client corporation, nonprofit organization, government entity, internal organizational structure, or the like. Aspects of these embodiments may include configuring a computer system to perform, and deploying software systems and web services that implement, some or all of the methods described herein. Aspects of these embodiments may also include analyzing the client company, creating recommendations responsive to the analysis, generating software to implement portions of the recommendations, integrating the software into existing processes and infrastructure, metering use of the methods and systems described herein, allocating expenses to users, and billing users for their use of these methods and systems. In addition, various programs described hereinafter may be identified based upon the application for which they are implemented in a specific embodiment of the invention. But, any particular program nomenclature that follows is used merely for convenience, and thus embodiments of the invention should not be limited to use solely in any specific application identified and/or implied by such nomenclature.

The exemplary environments illustrated in Fig. 1 are not intended to limit the present invention. Indeed, other alternative hardware and/or software environments may be used without departing from the scope of the invention.

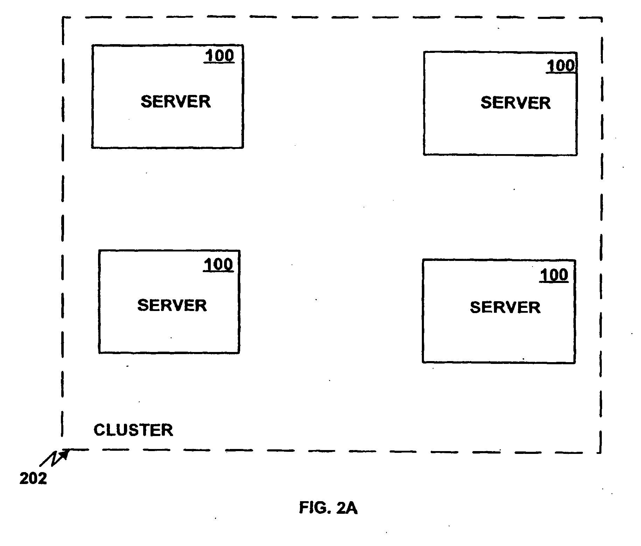

Fig. 2A depicts a block diagram of an example cluster 202 of the servers 100, according to an embodiment of the invention. The cluster 202 may also be known as a partition or a group. Any number of the servers 100 may be organized into the cluster 202 and any number of the clusters may exist. The servers 100 in the cluster 202 may send requests to each other (via the network 130 of Fig. 1) that use the services 159. Any of the servers 100 may act as a client.

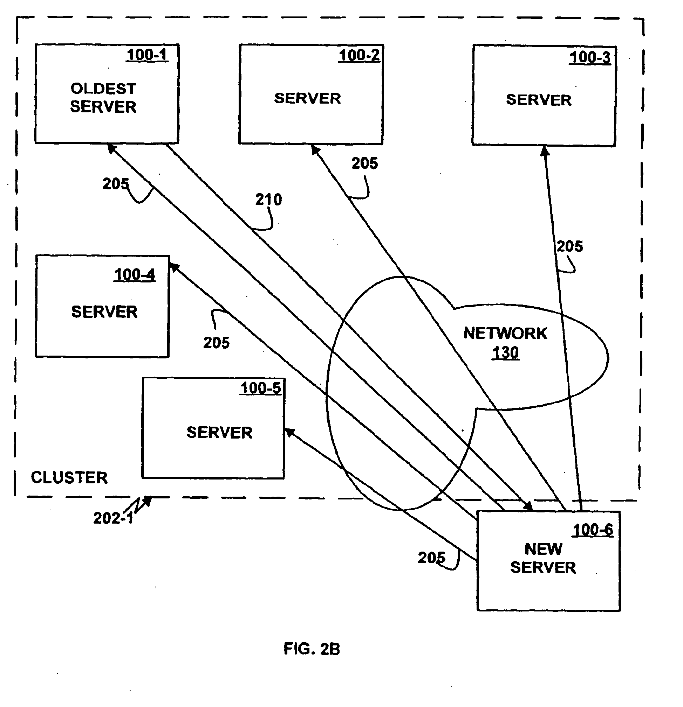

Fig. 2B depicts a block diagram of an example new server 100-6 joining the cluster 202-1, which includes servers 100-1, 100-2, 100-3, 100-4, and 100-5, according to an embodiment of the invention. The server 100 (Fig. 1) generically refers to the servers 100-1, 100-2, 100-3, 100-4, 100-5, and 100-6. The cluster 202 (Fig. 2A) generically refers to the cluster 202-1. The servers 100-1, 100-2, 100-3, 100-4, 100-5, and 100-6 are connected via the network 130.

The server 100-1 is the oldest server in the cluster 202-1, meaning that the server 100-1 has been in the cluster 202-1 the longest, is the original member of the cluster 202-1, and thus joined the cluster 202-1 at a time before the servers 100-2, 100-3, 100-4, 100-5, and 100-6 joined the cluster 202-1. The designation of the oldest server 100-1 may change as the servers 100 leave and join the cluster 202-1. The servers 100-1, 100-2, 100-3, 100-4, and 100-5 are pre-existing members of the cluster 202-1, meaning that they have already connected to the network 130 and have previously received the routing data 160 that identifies the various servers and available services 159 in the cluster 202-1 from the oldest server 100-1.

The server 100-6 is the new server in the cluster 202-1, meaning that it is joining the cluster 202-1 after the other servers 100-1, 100-2, 100-3, 100-4, and 100-5. In response to the new server 100-6 connecting to the network 130, the new server 100-6 sends a broadcast message 205 to the cluster 202-1 via the network 130, which includes a record that identifies the new server 100-6 and includes information about the new server 100-6 and the services 159 available at the new server 100-6. In broadcast messaging, the same message 205 is sent to all of the servers in the cluster 202-1 without the new server 100-6 needing to know the network address of the receiving servers 100-1, 100-2, 100-3, 100-4, and 100-5. Instead, the new server 100-6 sends the broadcast message 205 to an address of the cluster 202-1, and the network 130 sends the broadcast message 205 to each of the servers 100-1, 100-2, 100-3, 100-4, and 100-5 in the cluster 202-1. Broadcast messaging is also known as multi-casting.

The broadcast message 205 is received by all of the servers 100-1, 100-2, 100-3, 100-4, and 100-5 that are connected to the network 130. In response to receiving the broadcast message 205, the oldest server 100-1 adds the received record to its copy of the routing data 160 and sends the point-to-point message 210 to the new server 100-6, which includes the global resources data 160, which represents all of the servers 100-1, 100-2, 100-3, 100-4, and 100-5 in the cluster 202-1. The oldest server 100-1 sends the point-to-point message 210 exclusively to the new server 100-6, meaning that the oldest server 100-1 does not send the point-to-point message 210 to the other servers 100-2, 100-3, 100-4, and 100-5. A point-to-point message is also called a unicast message. In response to receiving the broadcast message 205, the servers 100-2, 100-3, 100-4, and 100-5 add the received record to their respective copies of the routing data 160, but do not need to send their respective routing data to the new server 100-6 because the oldest server 100-1 has responded with the single point-to-point message 210, which includes the routing data 160, representing all of the servers in the cluster 202-1.

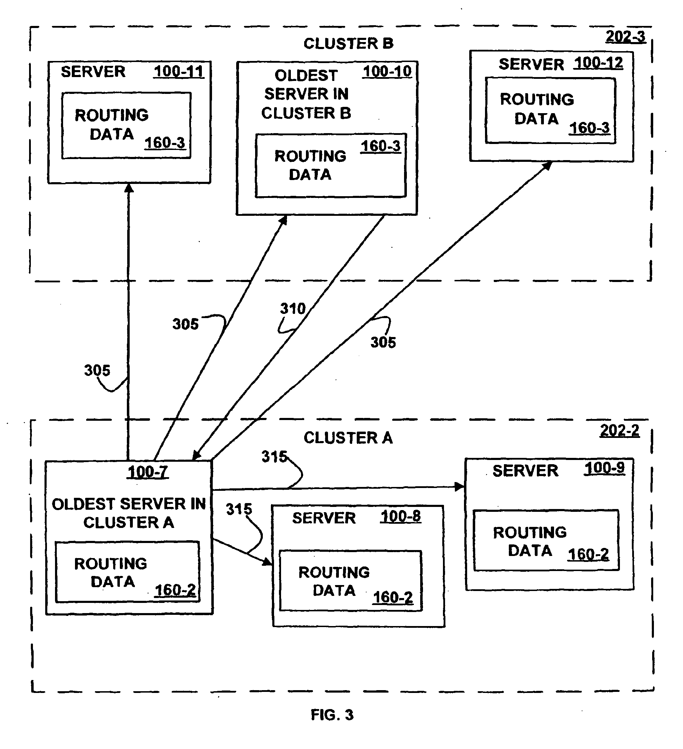

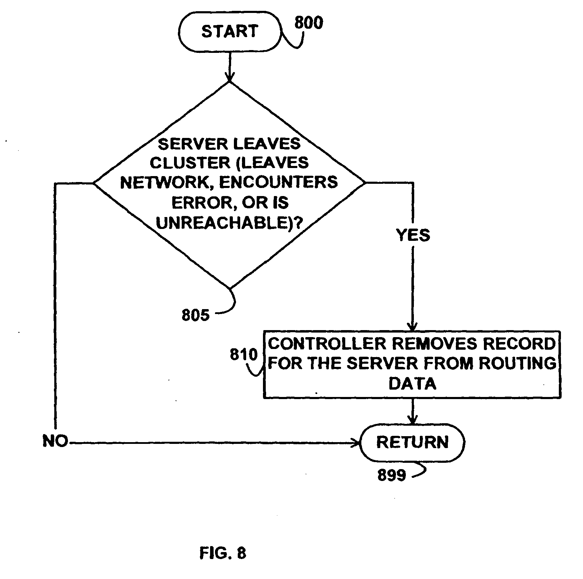

Fig. 3 depicts a block diagram of the merger of an example cluster 202-2 and cluster 202-3, according to an embodiment of the invention. The cluster 202-2 includes servers 100-7, 100-8, and 100-9. The cluster 202-3 includes servers 100-10, 100-11, and 100-12. The server 100 (Fig. 1) generically refers to the servers 100-7, 100-8, 100-9, 100-10, 100-11, and 100-12. The cluster 202 (Fig. 2A) generically refers to the clusters 202-2 and 202-3. In an embodiment, the clusters 202-2 and 202-3 were previously connected as one cluster 202, but lost their connection to each other, were broken apart, and are now being reconnected. As a result of being disconnected, the records for the servers in the lost cluster were removed from the routing data 160, as further described below with reference to Fig. 8. In another embodiment, the clusters 202-2 and 202-3 were not previously connected, but are now being connected.

In response to the oldest server 100-7 in the cluster 202-2 detecting connection (or reconnection) to the cluster 202-3, the oldest server 100-7 sends the broadcast message 305 to all the servers 100-10, 100-11, and 100-12 of the cluster 202-3. Although the servers 100-8 and 100-9 in the cluster 202-2 may detect the connection to the cluster 202-3, they do not send the broadcast message 305 because they are not the oldest server in the cluster 202-2. The broadcast message 305 includes all records in the routing data 160-2 for all servers 100-7, 100-8, and 100-9 in the cluster 202-2.

In response to receiving the broadcast message 305, the receiving servers 100-11 and 100-12 add the records of the routing data 160-2 from the broadcast message 305 to their respective copies of the routing data 160-3, but they do not respond because they are not the oldest server in the cluster 202-3. In response to receiving the broadcast message 305, the receiving server 100-10 determines that it is the oldest server in the cluster 202-3 by examining its copy of the routing data 160-3 and sends the point-to-point message 310 to the oldest server 100-7 in the cluster 202-2. The point-to-point message 310 includes all records in the routing data 160-3 for all servers 100-10, 100-11, and 100-12 in the cluster 202-3.

In response to receiving the point-to-point message 310, the oldest server 100-7 then sends the broadcast message 315 to the servers 100-8 and 100-9 in the cluster 202-2, which includes the records from the received routing data 160-3. The receiving servers 100-8 and 100-9 in the cluster 202-2 add the records from the received routing data 160-3 to their copies of the routing data 160-2. The oldest server 100-7 in the cluster 202-2 then adds the records from the received routing data 160-3 to its copy of the routing data 160-2. The clusters 202-2 and 202-3 are now merged into a single cluster, and the oldest server in the new single cluster is the older of the server 100-7 and 100-11, as indicated in the merged routing data 160-2 and 160-3.

Fig. 4 depicts a block diagram of an example data structure for the routing data 160, according to an embodiment of the invention. The routing data 160 includes records 405, 410, and 415, but in other embodiments any number of records with any appropriate data may be present. Each of the records 405, 410, and 415 includes a server identification field 420, a resource data field 425, and a timestamp field 430, but in other embodiments more or fewer fields may be present.

The server identification field 420 identifies the server 100 that is associated with the record. In various embodiments, the server identification field 420 may include a network address, an IP (Internet Protocol) address, a MAC address (Media Access Control) address, or any other type of identifier capable of being used to access or send messages, requests, or data to the server 100.

In various embodiments, the resource data 425 may include a resource identifier of resources or services 159 at the server 100, status of the resources or the services 159 at the server 100, content of the services 159, the number or type of pending requests at the services 159, CPU utilization of the processors 101 at the server 100, memory usage of the server 100, and an endpoint. But, in other embodiments, the resource data 425 may include any appropriate data that other servers may wish to receive.

The timestamp field 430 identifies the time that the associated server 420 joined the cluster. The time that the server 420 joined the cluster may be the time that the server 420 connected to the network or the time that the server 420 sent the broadcast message 205. Thus, in the example of Fig. 4, the record 405 identifies the oldest server in the cluster because the record 405 has the earliest timestamp 430.

Fig. 5 depicts a flowchart of example processing for a new server joining a cluster, according to an embodiment of the invention. Control begins at block 500. Control then continues to block 505 where the new server 100-6 connects to the network 130 and determines the address of the cluster 202-1'. Control then continues to block 510 where the controller 158 at the new server 100-6 creates a record with a server identification 420 that identifies the new server 100-6, with resource data 425 regarding the services 159 available at the new server 100-6 and a timestamp 430 that identifies the current time (which may include the date).

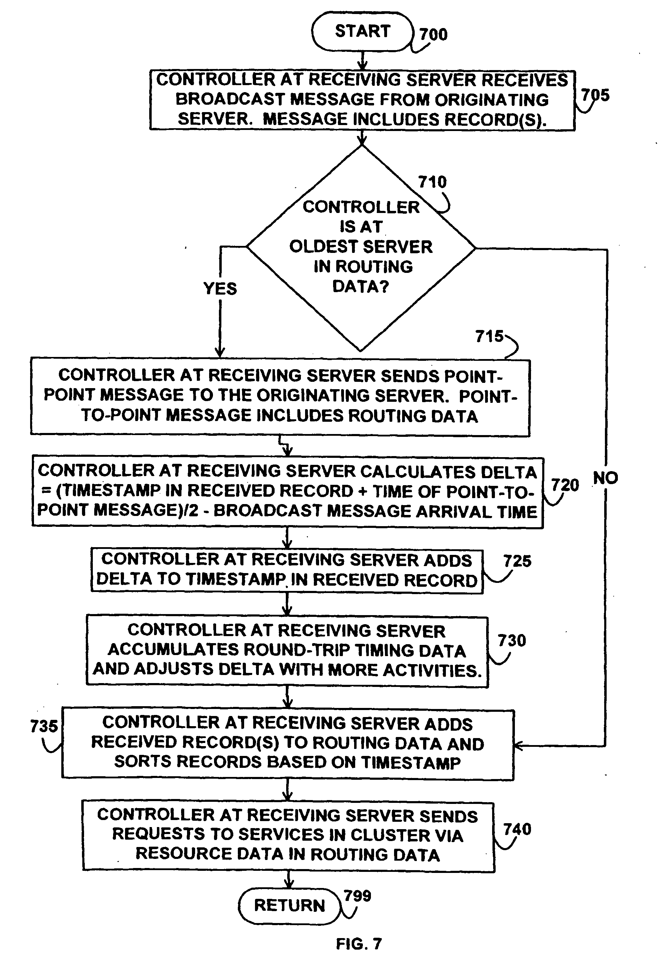

Control then continues to block 515 where the controller 158 at the new server 100-6 sends the broadcast message 205, which includes the created record, to all of the servers 100 in the cluster 202-1, via the determined address of the cluster 202-1 in the network 130. Control then continues to block 520 where the servers 100 in the cluster 202-1 receive and process the broadcast message 205, as further described below with reference to Fig. 7.

Control then continues to block 525 where the controller 158 at the new server 100-6 receives a point-to-point message 210 with the routing data 160 that contains records for all servers 100 in the cluster 202-1. The point-to-point message is sent by the oldest server 100-1 in the cluster 202-1 and is sent exclusively to the new server 100-6 and not to the other servers 100-2, 100-3, 100-4, and 100-5 in the cluster 202-1.

Control then continues to block 530 where the controller 158 at the new server 100-6 sends requests to the services 159 at other servers in the cluster 202-1 of the network 130 via the routing data 160. The controller 158 may use the routing data 160 to find the appropriate service in the resource data 425 and determine the server identifier 420 associated with the desired appropriate server, and then send the request to the determined server identifier 420. Thus, the controller 158 requests one or more services 159 from one or more of the servers 100 in the cluster 202 via the received routing data 160.

Control then continues to block 599 where the logic of Fig. 5 returns.

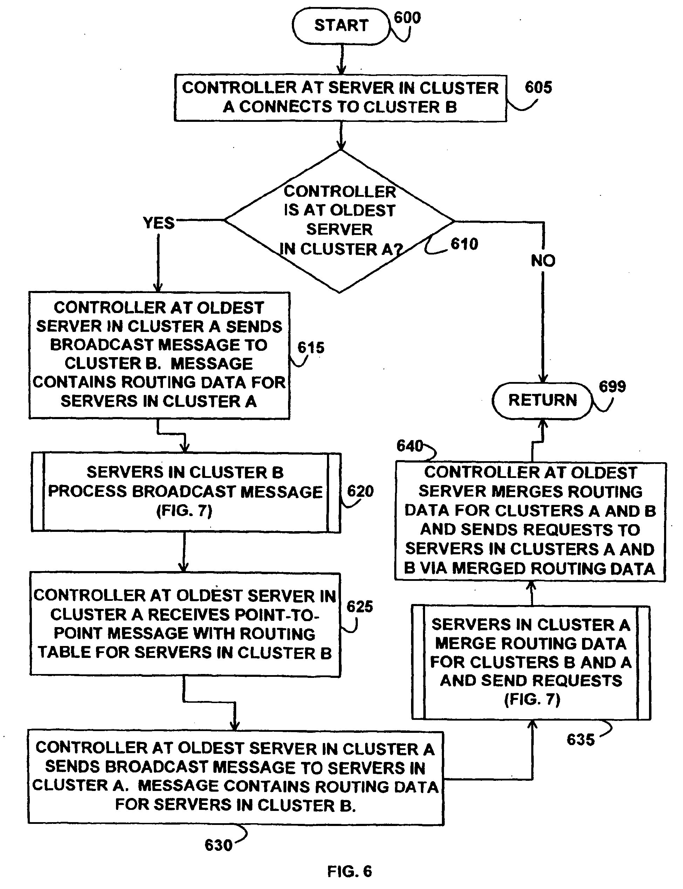

Fig. 6 depicts a flowchart of example processing for connecting clusters of servers, according to an embodiment of the invention. Control begins at block 600. Control then continues to block 605 where the controller 158 at the server 100 in the cluster 202-2 connects to the cluster 202-3. Control then continues to block 610 where the controller 158 at the server 100 determines whether the server 100 is the oldest server 100-7 in the cluster 202-2, i.e., the controller 158 determines whether the server 100 joined the cluster 202-2 before all of the other servers in the cluster 202-2 by determining whether the time 430 of the server 100 that connected to the cluster 202-3 is before or earlier than the times 430 of all other servers in the routing data 160-2.

If the determination at block 610 is true, then the server 100 that connected to the cluster 202-3 did join the cluster 202-2 before all other servers in the cluster 202-2 and is the oldest server 100-7 in the cluster 202-2, so control continues to block 615 where the controller 158 at the oldest server 100-7 sends the broadcast message 305 to the cluster 202-3. The broadcast message 305 includes all records in the routing data 160-2 for all the servers 100-7, 100-8, and 100-9 in the cluster 202-2.

Control then continues to block 620 where the servers in the cluster 202-3 process the broadcast message 305, as further described below with reference to Fig. 7. Control then continues to block 625 where the controller 158 at the oldest server 100-7 in the cluster 202-2 receives the point-to-point message 310 from the oldest server 100-10 in the cluster 202-3, which includes all records in the routing data 160-3 for all of the servers 100-10, 100-11, and 100-12 in the cluster 202-3.

Control then continues to block 630 where the controller 158 at the oldest server 100-7 in the cluster 202-2 sends the broadcast message 315 to all servers 100-8 and 100-9 in the cluster 202-2. The broadcast message 315 includes all records in the routing data 160-3 for all the servers 100-10, 100-11, and 100-12 in the cluster 202-3. Control then continues to block 635 where the servers in the cluster 202-2 receive the broadcast message, merge their copies of the routing data 160-3 and 160-2, and send requests to the servers in the clusters 202-2 and 202-3 via the merged routing data, as further described below with reference to Fig. 7. Control then continues to block 640 where the controller 158 at the oldest server 100-7 in the cluster 202-2 merges its copies of the routing data 160-3 and 160-2 and sends requests to the servers in the clusters 202-2 and 202-3 via the merged routing data. Control then continues to block 699 where the logic of Fig. 6 returns.

If the determination at block 610 is false, then the server 100 in the cluster 202-2 that connected to the cluster 202-3 did not join the cluster 202-2 before all other servers in the cluster 202-2, so the server 100 that connected to the cluster 202-3 is the server 100-8 or 100-9, so control continues to block 699 where the logic of Fig. 6 returns.

Fig. 7 depicts a flowchart of example processing at a server for handling receipt of a broadcast message, according to an embodiment of the invention. Control begins at block 700. Control then continues to block 705 where the controller 158 at a receiving server receives the broadcast message (e.g., the broadcast message 205, 305, or 315) from the originating server (the server that sent the broadcast message). The received broadcast message includes one or more records 405, 410, or 415, which are associated with the originating server or which are associated with all servers in a cluster 202.

Control then continues to block 710 where the controller 158 determines whether the receiving server is the oldest server in the local copy of the routing data 160. The controller 158 makes the determination by comparing the timestamp 430 in the record of the routing data 160 associated with the receiving server to the timestamp 430 for the other records in the routing data 160 and determining whether the time 430 that the receiving server joined the cluster 202 is earlier than the times 430 that the other servers joined the cluster 202.

If the timestamp 430 of the receiving server is the earliest time (before all other times) in the routing data 160 of the cluster 202, then the receiving server is the oldest server (e.g., the server 100-1, 100-7, or 100-10) in the cluster 202, so control continues to block 715 where the controller 158 at the receiving server retrieves the records from its local copy of the routing data 160 for all of the servers in the cluster 202, adds the retrieved records to a point-to-point message, and sends the point-to-point message (e.g., the point-to-point message 210 or 310) to the server (e.g., the server 100-6 or 100-7) that originated the broadcast message.

Control then continues to block 720 where the controller 158 at the receiving server calculates: delta = (t1 + t3)/2 - t2, where:
t2 = the arrival time of the broadcast message;
t1 = the timestamp 430 in the received record in the broadcast message that is associated with the originating server, which is the time that the originating server of the broadcast message joined the cluster 202; and
t3 = the time that the receiving server sent the point-to-point message to the originating server (previously described above with reference to block 715).

Control then continues to block 725 where the controller 158 at the receiving server adds the calculated delta to the timestamp 430 in the received record associated with the server that originated the broadcast message. Thus, the controller 158 at the receiving server adjusts the time that the originating server joined the cluster 202 by the calculated delta to account for the delay between the time that originating server decided to join the cluster and the time that the oldest server in the cluster 202 realized that the originating server joined the cluster 202.

Control then continues to block 730 where the controller 158 at the receiving server accumulates round-trip timing data and adjusts the calculated data with more activities.

Control then continues to block 735 where the controller 158 at the receiving server adds the records received in the broadcast message to the routing data 160 and sorts the records in the routing data 160 based on the timestamp 430.

Control then continues to block 740 where the controller 158 at the receiving server finds appropriate services 159 identified in the resource data 425 and sends requests to the services 159 at the servers 100 in the cluster 202 via the associated server identifier 420.

If the determination at block 710 is false, then the receiving server is not the oldest server in the local copy of the routing data 160 (i.e., the receiving server did not join the cluster 202 at an earlier time than the other servers 100 in the cluster 202), so control continues to block 735, as previously described above.

Fig. 8 depicts a flowchart of example processing responding to a server leaving a network 130, according to an embodiment of the invention. Control begins at block 800. Control then continues to block 805 where the controller 158 determines whether a server 100 has left the cluster 202, for example, whether a server 100 left the network 130, has encountered an error, or has become unreachable. If the determination at block 805 is true, then a server 100 has left the cluster 202, a server 100 has left the network 130, a server 100 has encountered an error, or a server 100 is unreachable, so control continues to block 810 where the controller 158 finds a record via the server identifier field 420 from the routing data 160 associated with the server 100 that was determined at block 805 and removes the record from the routing data 160. Control then continues to block 899 where the logic of Fig. 8 returns.

If the determination at block 805 is false, then control continues to block 899 where the logic of Fig. 8 returns.

Different instances of the word "embodiment" as used within this specification do not necessarily refer to the same embodiment, but they may. Any data and data structures illustrated or described herein are examples only, and in other embodiments, different amounts of data, types of data, fields, numbers and types of fields, field names, numbers and types of records, entries, or organizations of data may be used. In addition, any data may be combined with logic, so that a separate data structure is not necessary. The previous detailed description is, therefore, not to be taken in a limiting sense, and the scope of the present invention is defined only by the appended claims.

In the previous description, numerous specific details were set forth to provide a thorough understanding of the invention. But, the invention may be practised without these specific details. In other instances, well-known circuits, structures, and techniques have not been shown in detail in order not to obscure the invention.

## Claims

1. A method performed at a receiving server (100-1) in a cluster (202-1) of a plurality of servers, comprising:
receiving a broadcast message (205) from a new server (100-6), wherein the new server sent the broadcast message to the cluster of the plurality of servers;
**characterised by:**
determining whether the receiving server joined the cluster before all other of the plurality of the servers in the cluster by comparing a timestamp (430) in the record of the routing data (160) associated with the receiving server to the timestamps (430) for the other records in the routing data; and
if the determining is true, sending a point-to-point message (210) to the new server, wherein the point-to-point message comprises routing data regarding all of the plurality of servers in the cluster.

2. The method of claim 1, wherein the broadcast message comprises:
a record comprising an identification of the new server, resource data regarding the new server, and a time that the new server joins the cluster.

3. The method of claim 2, further comprising:
adding the record to the routing data.

4. The method of claim 1, wherein the routing data comprises:
a plurality of records associated with the plurality of servers, wherein each of the plurality of records comprise an identification of the respective server, resources provided by the respective server, and a time that the respective server joined the cluster, wherein the receiving server performs the determining based on the times in the plurality of records.

5. The method of claim 4, further comprising:
if one of the plurality of servers leaves the cluster, removing the record associated with the one server that leaves the cluster from the routing data.

6. The method of claim 1, wherein the sending the point-to-point message further comprises:
sending the point-to-point message exclusively to the new server.

7. The method of claim 2, further comprising:
if the determining is false, adding the record to the routing data.

8. A method performed at a new server (100-6) which wants to join a cluster (202-1) of servers, comprising:
sending a broadcast message (205) to the cluster of servers connected via a network (130); and
**characterised by:**
receiving a point-to-point message (210) from a server (100-1) of the cluster of servers, wherein the server (100-1) joined the cluster before all other of the servers in the cluster, and wherein the point-to-point message comprises routing data (160) regarding all of the servers in the cluster, and wherein the point-to-point message is received exclusively by the new server (100-6).

9. The method of claim 8, wherein the routing data comprises:
identifications of all of the servers in the cluster, resources provided by all of the servers in the cluster, and times that each of the servers joined the cluster.

10. The method of claim 8, further comprising:
storing a time in the broadcast message, wherein the time comprises the time that the new server joins the cluster.

11. The method of claim 8, further comprising:
storing an identification of the new server and resource data in the broadcast message; wherein the resource data describes at least one service available at the new server.

12. A system comprising means adapted for carrying out all the steps of the method according to any proceeding method claim.

13. A computer program comprising instructions for carrying out all the steps of the method according to any proceeding method claim, when said computer program is executed on a computer system.

## Patentansprüche

1. Verfahren, das an einem Empfangsserver (100-1) in einem aus einer Vielzahl von Servern bestehenden Verbund (202-1) durchgeführt wird, wobei das Verfahren Folgendes umfasst:
Empfangen einer Rundsendenachricht (205) von einem neuen Server (100-6), wobei der neue Server die Rundsendenachricht an den aus der Vielzahl von Servern bestehenden Verbund gesendet hat;
**gekennzeichnet durch:**
Feststellen, ob sich der Empfangsserver dem Verbund vor allen anderen Servern der Vielzahl von Servern in dem Verbund angeschlossen hat, indem ein Zeitstempel (430) in der Aufzeichnung der Weiterleitungsdaten (160), die zu dem Empfangsserver gehört, mit den Zeitstempeln (430) für die anderen Aufzeichnungen in den Weiterleitungsdaten verglichen wird; und
wenn die Feststellung richtig ist, Senden einer Punkt-zu-Punkt-Nachricht (210) an den neuen Server, wobei die Punkt-zu-Punkt-Nachricht Weiterleitungsdaten in Bezug auf alle Server der Vielzahl von Servern in dem Verbund umfasst.

2. Verfahren nach Anspruch 1, wobei die Rundsendenachricht Folgendes umfasst:
eine Aufzeichnung, die eine Kennung des neuen Servers, Ressourcendaten in Bezug auf den neuen Server und einen Zeitpunkt, zu dem sich der neue Server dem Verbund anschließt, umfasst.

3. Verfahren nach Anspruch 2, das des Weiteren Folgendes umfasst:
Hinzufügen der Aufzeichnung zu den Weiterleitungsdaten.

4. Verfahren nach Anspruch 1, wobei die Weiterleitungsdaten Folgendes umfassen:
eine Vielzahl von Aufzeichnungen, die zu der Vielzahl von Servern gehören, wobei jede Aufzeichnung der Vielzahl von Aufzeichnungen eine Kennung des jeweiligen Servers, Ressourcen, die von dem jeweiligen Server bereitgestellt werden, und einen Zeitpunkt, zu dem sich der jeweilige Server dem Verbund angeschlossen hat, umfasst, wobei der Empfangsserver die Feststellung auf der Grundlage der Zeitpunkte in der Vielzahl der Aufzeichnungen trifft.

5. Verfahren nach Anspruch 4, das des Weiteren Folgendes umfasst:
wenn ein Server der Vielzahl von Servern den Verbund verlässt, Entfernen der Aufzeichnung, die zu dem einen Server gehört, der den Verbund verlässt, aus den Weiterleitungsdaten.

6. Verfahren nach Anspruch 1, wobei das Senden der Punkt-zu-Punkt-Nachricht des Weiteren Folgendes umfasst:
Senden der Punkt-zu-Punkt-Nachricht ausschließlich an den neuen Server.

7. Verfahren nach Anspruch 2, das des Weiteren Folgendes umfasst:
wenn die Feststellung falsch ist, Hinzufügen der Aufzeichnung zu den Weiterleitungsdaten.

8. Verfahren, das an einem neuen Server (100-6) durchgeführt wird, der sich einem Verbund (202-1) von Servern anschließen möchte, wobei das Verfahren Folgendes umfasst:
Senden einer Rundsendenachricht (205) an den Verbund von Servern, die über ein Netzwerk (130) miteinander verbunden sind; und
**gekennzeichnet durch:**
Empfangen einer Punkt-zu-Punkt-Nachricht (210) von einem Server (100-1) des Verbunds von Servern, wobei sich der Server (100-1) dem Verbund vor allen anderen Servern in dem Verbund angeschlossen hat und wobei die Punkt-zu-Punkt-Nachricht Weiterleitungsdaten (160) in Bezug auf alle Server in dem Verbund umfasst und wobei die Punkt-zu-Punkt-Nachricht ausschließlich von dem neuen Server (100-6) empfangen wird.

9. Verfahren nach Anspruch 8, wobei die Weiterleitungsdaten Folgendes umfassen:
Kennungen von allen Servern in dem Verbund, Ressourcen, die von allen Servern in dem Verbund bereitgestellt werden, und Zeitpunkte, zu denen sich jeder der Server dem Verbund angeschlossen hat.

10. Verfahren nach Anspruch 8, das des Weiteren Folgendes umfasst:
Speichern eines Zeitpunkts in der Rundsendenachricht, wobei der Zeitpunkt den Zeitpunkt umfasst, zu dem sich der neue Server dem Verbund anschließt.

11. Verfahren nach Anspruch 8, das des Weiteren Folgendes umfasst:
Speichern einer Kennung des neuen Servers und von Ressourcendaten in der Rundsendenachricht, wobei die Ressourcendaten mindestens einen Dienst beschreiben, der an dem neuen Server zur Verfügung steht.

12. System, das ein Mittel umfasst, welches so ausgelegt ist, dass es alle Schritte des Verfahrens nach einem der vorhergehenden Verfahrensansprüche durchführt.

13. Rechnerprogramm, das Befehle zur Durchführung aller Schritte des Verfahrens nach einem der vorhergehenden Verfahrensansprüche umfasst, wenn das Rechnerprogramm auf einem Rechnersystem ausgeführt wird.

## Revendications

1. Procédé exécuté au niveau d'un serveur récepteur (100-1) dans une grappe (202-1) constituée d'une pluralité de serveurs, comprenant :
la réception d'un message diffusé (205) provenant d'un nouveau serveur (100-6), où le nouveau serveur a envoyé le message diffusé à la grappe constituée de la pluralité de serveurs,
**caractérisé par** les étapes consistant à :
déterminer si le serveur récepteur a rejoint la grappe avant tous les autres serveurs la pluralité des serveurs de la grappe en comparant un horodateur (430) dans l'enregistrement des données de routage (160) associé au serveur récepteur aux horodateurs (430) pour les autres enregistrements dans les données de routage, et
si la détermination correspond à la valeur vrai, envoyer un message de point à point (210) au nouveau serveur, où le message de point à point comprend des données de routage concernant la totalité de la pluralité des serveurs de la grappe.

2. Procédé selon la revendication 1, dans lequel le message diffusé comprend :
un enregistrement comprenant une identification du nouveau serveur, des données de ressources concernant le nouveau serveur et l'instant auquel le nouveau serveur rejoint la grappe.

3. Procédé selon la revendication 2, comprenant en outre :
l'ajout de l'enregistrement aux données de routage.

4. Procédé selon la revendication 1, dans lequel les données de routage comprennent :
une pluralité d'enregistrements associés à la pluralité de serveurs, où chaque enregistrement parmi la pluralité d'enregistrements comprend une identification du serveur respectif, les ressources fournies par le serveur respectif, et l'instant auquel le serveur respectif a rejoint la grappe, où le serveur récepteur exécute la détermination sur la base des instants dans la pluralité d'enregistrements.

5. Procédé selon la revendication 4, comprenant en outre l'étape consistant à :
si un serveur parmi la pluralité de serveurs quitte la grappe, ôter des données de routage l'enregistrement associé au serveur qui quitte la grappe.

6. Procédé selon la revendication 1, dans lequel l'envoi du message de point à point comprend en outre :
l'envoi du message de point à point exclusivement au nouveau serveur.

7. Procédé selon la revendication 2, comprenant en outre l'étape consistant à :
si la détermination correspond à la valeur faux, ajouter l'enregistrement aux données de routage.

8. Procédé exécuté au niveau d'un nouveau serveur (100-6) qui veut rejoindre une grappe (202-1) de serveurs, comprenant :
l'envoi d'un message diffusé (205) à la grappe de serveurs connectés par l'intermédiaire d'un réseau (130), et
**caractérisé par** :
la réception d'un message de point à point (210) d'un serveur (100-1) de la grappe de serveurs, où le serveur (100-1) a rejoint la grappe avant tous les autres serveurs de la grappe, et où le message de point à point comprend des données de routage (160) concernant la totalité des serveurs de la grappe, et où le message de point à point est reçu exclusivement par le nouveau serveur (100-6).

9. Procédé selon la revendication 8, dans lequel les données de routage comprennent :
les identification de tous les serveurs de la grappe, les ressources fournies par tous les serveurs de la grappe, et les instants auxquels chacun des serveurs a rejoint la grappe.

10. Procédé selon la revendication 8, comprenant en outre :
la mémorisation d'un instant dans le message diffusé, où l'instant comprend l'instant auquel le nouveau serveur rejoint la grappe.

11. Procédé selon la revendication 8, comprenant en outre :
la mémorisation d'une identification du nouveau serveur et des données de ressources dans le message diffusé, où les données de ressources décrivent au moins un service disponible au niveau du nouveau serveur.

12. Système comprenant un moyen conçu pour exécuter la totalité des étapes de procédé selon l'une quelconque des revendications de procédé précédentes.

13. Programme informatique comprenant des instructions pour exécuter la totalité des étapes de procédé selon l'une quelconque des revendications de procédé précédentes, lorsque ledit programme informatique est exécuté sur un système informatique.
